# EUROPÄISCHE PATENTANMELDUNG

(11) **EP 3 156 945 A1**
(43) Veröffentlichungstag der Anmeldung: **19.04.2017**
(21) Anmeldenummer: 15002912.2
(22) Anmeldetag: 13.10.2015
(51) Int. Cl.: G06K 19/06, G03H 1/00

(54) **VERFAHREN ZUR HERSTELLUNG WENIGSTENS EINES MIKROPARTIKELS, INSBESONDERE EINES MIKROPARTIKELS ZUR FÄLSCHUNGSSICHEREN KENNZEICHNUNG VON PRODUKTEN, SOWIE MIKROPARTIKEL**

(71) Anmelder: 3S Simons Security Systems GmbH, 48301 Nottuln (DE)
(72) Erfinder: Simons, Rolf, D-48301 Nottuln (DE)
(74) Vertreter: DTS Patent- und Rechtsanwälte Schnekenbühl und Partner mbB

(57) **Zusammenfassung**

Die vorliegende Erfindung betrifft ein Verfahren zur Herstellung wenigstens eines Mikropartikels (10), insbesondere eines Mikropartikels (10) zur fälschungssicheren Kennzeichnung von Produkten, wobei das Verfahren wenigstens die folgenden Schritte aufweist:
- Es wird eine erste Schicht (20) bereitgestellt;
- es wird mittels eines Transferverfahrens wenigstens ein Zeichen (15) auf der ersten Schicht (20) angebracht; und
- die Schicht (20) mit dem Zeichen (15) wird zerkleinert.

Des Weiteren betrifft die vorliegende Erfindung einen Mikropartikel (10), insbesondere einen Mikropartikel (10) zur fälschungssicheren Kennzeichnung von Produkten.

## Beschreibung

Die vorliegende Erfindung betrifft ein Verfahren zur Herstellung eines Mikropartikels, insbesondere eines Mikropartikels zur fälschungssicheren Kennzeichnung von Produkten, sowie einen Mikropartikel, insbesondere einen Mikropartikel zur fälschungssicheren Kennzeichnung von Produkten.

Die Unterscheidung von Originalwaren und von gefälschten Waren ist ein immer größer werdendes Problem. Dieses Problem wird insbesondere dadurch verstärkt, dass nachgemachte bzw. gefälschte Waren qualitativ immer besser werden und teilweise kaum mehr von den Originalwaren unterscheidbar sind. Darüber hinaus ist auch festzustellen, dass sich das Problem der Produkt- und Markenpiraterie nun nicht mehr nur im Wesentlichen auf z.B. nachgeahmte bzw. gefälschte Kleidung erstreckt, sondern zunehmend auch in sicherheitskritischen Bereichen wie beispielsweise bei Kraftfahrzeug- und Flugzeugersatzteilen oder auch im Pharmabereich, d.h. z.B. durch gefälschte Arzneimittel, auftritt.

Die Bereitstellung fälschungssicherer Erkennungsmerkmale für Originalwaren gewinnt daher zunehmend an Bedeutung.

Die DE 26 51 528 A1 offenbart diesbezüglich farbcodierte Kenn-Mikroteilchen, die aus mehreren farbigen Schichten in einer vorgewählten Farbfolge bestehen, wobei die Farbfolge einen Kenncode darstellt. Die Mikroteilchen werden dabei aus Melamin-Alkyd-Harz hergestellt, wobei sieben Farbschichten übereinander mit einer Dicke von 91,4 µm auf eine Polyesterträgerfolie von 50,8 µm aufgebracht werden.

Aus der US 4,390,452 sind ferner Mikropartikel einer einheitlichen Dicke von ca. 140 µm bekannt, wobei auf einer Oberfläche des Mikropartikels nach dem Zusammenfügen der mehreren Schichten Buchstaben und Zahlen aufgebracht werden.

Die WO 2007/106512 A2 offenbart ebenfalls Mikropartikel bestehend aus mehreren Schichten, die zudem mehrere Farben aufweisen.

Die US 6,952,994 B2 offenbart ein Identifikationsetikett, auf dem ein Hologramm aufgebracht ist.

Aus der EP 0 832 477 B1 ist ferner ein Verfahren zur Herstellung von mehrschichtigen Mikropartikeln bekannt, wobei auf einem bahn- oder bogenförmigen Träger nacheinander mehrere Kennzeichnungsschichten aufgetragen werden, wobei das Auftragen jeder Kennzeichnungsschicht in flüssiger Form erfolgt und wobei nach dem Auftragen jeder Kennzeichnungsschicht eine Trocknung und/oder Härtung erfolgt, bevor die nächste Kennzeichnungsschicht aufgetragen wird, bis ein Schichtenstapel mit einer gewünschten Art und Folge von Kennzeichnungsschichten gebildet ist, wobei in einem nächsten Schritt der Träger- und der Schichtenstapel voneinander getrennt werden und der Schichtenstapel unter Erhaltung der vollen Kennzeichnungsschichtenfolge zu mehrschichtigen Mikropartikeln zerkleinert wird.

Aus der EP 1 003 146 B1 ist ferner ein Verfahren zur Sicherung und Kennzeichnung von Produkten unter Verwendung von Mikropartikeln bekannt. Dabei werden für jedes Produkt zwei oder mehr verschieden codierte Mikropartikel-Gruppen verwendet.

Aus der WO 2014/023523 ist bereits ein Mikropartikel zur fälschungssicheren Kennzeichnung von Produkten bekannt, der aus mehreren Farbschichten aufgebaut ist, die einen Farbcode bilden und wobei auf einer außen liegenden Schicht eine Kennzeichnung vorangebracht ist.

Wünschenswert wäre es jedoch, die vorstehend beschriebenen Kennzeichnungssysteme noch einfacher herstellen zu können. Es ist daher die Aufgabe der vorliegenden Erfindung, ein Verfahren zur Herstellung eines Mikropartikels sowie einen Mikropartikel der eingangs genannten Art in vorteilhafter Weise weiterzubilden, insbesondere dahingehend, dass die Herstellung deutlich vereinfacht werden kann.

Diese Aufgabe wird erfindungsgemäß gelöst durch ein Verfahren zur Herstellung wenigstens eines Mikropartikels mit den Merkmalen des Anspruchs 1. Danach ist vorgesehen, dass zur Herstellung eines Mikropartikels zur fälschungssicheren Kennzeichnung von Produkten das Herstellungsverfahren wenigstens die folgenden Schritte aufweist:
- Es wird eine erste Schicht bereitgestellt;
- es wird mittels eines Transferverfahrens wenigstens ein Zeichen auf der ersten Schicht angebracht; und
- die Schicht mit dem Zeichen wird zerkleinert.

Die Erfindung basiert auf dem Grundgedanken, dass mittels eines geeigneten, einfach zu handhabenden Übertragungsverfahrens ein Zeichen auf der ersten Schicht angebracht werden kann, das ein zusätzliches Identifizierungsmerkmal im Zusammenhang mit den Mikropartikeln und beispielsweise einem zu kennzeichnenden Originalprodukt darstellt. Ein derartiges Verfahren zum Aufbringen von Zeichen ist ein sogenanntes Transferverfahren.

Der Mikropartikel kann beispielsweise kleiner als ca. 300 µm ausgebildet sein, d.h. dass der Mikropartikel mit jeder seiner Abmessungen ca. 300 µm nicht überschreitet. Dadurch ergibt sich der Vorteil, dass die Nachahmung von Mikropartikeln erschwert bis unmöglich gemacht wird, da beispielsweise der Aufwand für Fälscher zu groß wird. Die Abmessungen des Mikropartikels sind insbesondere Länge, Breite und Tiefe des Mikropartikels, die jeweils ca. 100 µm nicht überschreiten. Auch andere Größen, wie beispielsweise ca. 250, ca. 200 µm oder auch eine Größenordnung von weniger als ca. 100 µm sind denkbar.

Eine Schicht kann beispielsweise durch eine Kunststofffolie bzw. durch einen Kunststoffliner ausgebildet sein. Ein derartiger Kunststoffliner kann auch aus PET-Material bestehen.

Die Kennzeichnung kann beispielsweise durch eine Mikroschrift ausgebildet sein. Da die Mikropartikel vorzugsweise in einem Herstellungsprozess entstehen, in dem die Mikropartikel durch Zerkleinerung eines mehrlagigen Schichtaufbaus entstehen, weisen die Mikropartikel auch eine randomisierte Gestalt und ein oder mehrere Bruchkanten und/oder Schnittkanten auf.

Der Begriff des vorangebrachten Zeichens ist breit auszulegen. Insbesondere ist denkbar, dass im Zusammenhang mit dem Herstellungsschritt der Zerkleinerung zur Herstellung der Mikropartikel ein vorangebrachtes Zeichen nur noch teilweise erkennbar ist, was jedoch als vollkommen ausreichend im Sinne der Erfindung zu erachten ist. Grundsätzlich ist es wünschenswert und vorteilhaft, wenn wenigstens ein Zeichen vollständig ersichtlich ist, was jedoch nicht zwingend erforderlich zur Ausführung der Erfindung ist. Möglich ist auch, dass mehrere Zeichen ganz oder teilweise vorgesehen sind, die auf dieser außen liegenden Seite angeordnet sind.

Des Weiteren kann vorgesehen sein, dass weiter die folgenden Schritte vorgesehen sind:
- es wird wenigstens eine zweite Schicht auf der Seite der ersten Schicht aufgetragen, auf der kein Zeichen angebracht ist; und
- die Schichten werden gemeinsam zerkleinert.

Das Transferverfahren kann ein Heißtransferverfahren sein. Dabei werden vorangebrachte Zeichen auf die erste Schicht übertragen und dort mittels einer erhitzten Klebeschicht fixiert.

Denkbar ist weiter, dass das Transferverfahren ein Sublimationsdruckverfahren ist. Sublimationsdruck oder Transferdruck bezeichnet ein Druckverfahren, bei dem Farbstoff in den Trägerstoff eingedampft (sublimiert) wird.

Das Transferverfahren kann auch ein Nasstransferverfahren sein. Als Nasstransfer wird die einfache Beschriftung / Bedruckung von Gegenständen, also hier der ersten Schicht, mittels Feuchtübertragung bezeichnet werden.

Es kann des Weiteren vorgesehen sein, dass der Mikropartikel wenigstens eine Fläche aufweist, die derart beschaffen ist, dass die übereinander liegenden Schichten ersichtlich sind. Eine derartige Fläche kann beispielsweise eine Bruchkante und/oder Schnittkante sein oder durch eine Bruchkante und/oder Schnittkante zumindest teilweise ausgebildet sein. Durch die übereinander liegenden Schichten kann beispielsweise eine Codierung ausgebildet sein, die durch die Fläche ersichtlich wird und somit optisch überprüfbar wird bzw. überprüft werden kann. Ferner ist möglich, dass der Mikropartikel mit jeder seiner Abmessungen ca. 50 µm nicht überschreitet, vorzugsweise ca. 20 µm nicht überschreitet, besonders bevorzugt ca. 8 µm nicht überschreitet. In einem Fall, in dem der Mikropartikel mit jeder seiner Abmessungen ca. 8 µm nicht überschreitet, kann die erste Schicht insbesondere durch ein sogenanntes Transfermaterial ausgebildet werden. Ein derartiges Transfermaterial kann beispielsweise ein Heißtransfer bzw. ein Bügelbild oder dergleichen sein.

Grundsätzlich ist denkbar, dass jegliche Größe der Abmessungen im Bereich zwischen ca. 8 µm bis ca. 100 µm gewählt werden kann. Insbesondere ist es dabei vorteilhaft, dass das zumindest eine Zeichen vollständig auf der außen liegenden Fläche der ersten Schicht ersichtlich bleibt und die Abmessungen des Mikropartikels dementsprechend gewählt werden. Es ist somit denkbar, dass der Mikropartikel mit jeder seiner Abmessungen ca. 100 µm nicht überschreitet, aber auch mit jeder seiner Abmessungen ca. 8 µm nicht unterschreitet.

Darüber hinaus ist denkbar, dass das zumindest eine Zeichen zumindest ein Teil eines Hologramms und/oder eines Aufdruckes ist, wobei vorzugsweise das Zeichen wenigstens einen Buchstaben, wenigstens ein Teil eines Bildzeichens und/oder wenigstens eines Wort-/Bildzeichens, insbesondere eines Logos und/oder Markenzeichens ist oder ein derartiges Zeichen umfasst. Insbesondere ist vorteilhaft möglich, dass es sich zur Kennzeichnung von Originalwaren bei dem Zeichen stets um das Markenzeichen des Originalherstellers handelt.

Vorteilhafterweise kann ferner vorgesehen sein, dass wenigstens eine weitere Schicht vorgesehen ist, die auf der zweiten Schicht aufgetragen und/oder angeordnet ist. Diese weitere Schicht kann eine Farbschicht sein. Vorzugsweise ist möglich, dass mehrere weitere Schichten vorgesehen sind, die auf der zweiten Schicht aufgetragen und/oder angeordnet sind, wobei vorzugsweise die weiteren Schichten Farbschichten sind, so dass vorzugsweise die zweite Schicht und die weiteren Schichten eine Anordnung von Schichten ergeben, die derart beschaffen ist, dass durch die Schichten ein Farbcode ausgebildet wird, wobei die Schichten vorzugsweise jeweils eine Schichtstärke im Bereich zwischen ca. 0,5 µm bis ca. 15 µm, beispielsweise zwischen ca. 8 µm bis 10 µm, vorzugsweise zur Herstellung kleiner Mikropartikel ca. 0,8 µm, aufweisen.

Dieser Farbcode kann derart beschaffen sein, dass er eindeutig einem Hersteller und/oder einem Produkt zugeordnet werden kann. Denkbar ist, der Farbcode durch einen Schichtaufbau von fünf bis zwölf Schichten aufgebaut ist. Vorzugsweise werden Schichtanzahlen von zehn oder elf Schichten gewählt, um eine ausreichende Codierungsmöglichkeit zu erhalten.

In einem Fall, in dem der Farbcode durch einen Schichtaufbau von bis zu zwölf Schichten aufgebaut ist, kann die erste der zwölf Schichten eine Schicht mit wenigstens einem vorangebrachten Zeichen sein, die weiteren Schichten zwei bis elf Farbschichten und die zwölfte Schicht erneut eine Schicht mit wenigstens einem vorangebrachten Zeichen sein.

Zur Herstellung der Mikropartikel wird beispielsweise derart vorgegangen, dass auf der als Trägerschicht fungierenden ersten Schicht nacheinander die wenigstens eine zweite Schicht bzw. mehrere Schichten aufgetragen werden. Diese weiteren Schichten können Farbschichten, insbesondere Kennzeichnungsschichten sein. Beispielsweise kann das Auftragen dieser Kennzeichnungsschichten in flüssiger Form erfolgen.

Nach dem Auftragen jeder Kennzeichnungsschicht kann ferner eine Trocknung und/oder Härtung erfolgen, bevor die nächste Kennzeichnungsschicht aufgetragen wird. Dies wird solange fortgeführt bis ein Schichtenstapel mit der gewünschten Art und Folge von Kennzeichnungsschichten ausgebildet ist.

Sodann wird der Schichtenstapel unter Erhaltung der vollen Kennzeichnungsschichtenfolge zu mehrschichtigen Mikropartikeln zerkleinert.

Das Auftragen der einzelnen Kennzeichnungsschichten erfolgt dabei mittels eines Druckverfahrens, wobei vorzugsweise ein Hochdruckverfahren oder ein Tiefdruckverfahren oder ein Flachdruckverfahren oder ein Durchdruckverfahren bzw. Siebdruckverfahren verwendet werden kann.

Grundsätzlich ist auch denkbar, dass das Auftragen jeder Kennzeichnungsschicht statt in flüssiger Form auch in pastöser Form erfolgen kann. Insbesondere ist in diesem Zusammenhang denkbar, dass das Auftragen jeder Kennzeichnungsschicht in einem thixotropen Zustand erfolgt.

Möglich ist insbesondere auch, dass als Grundsubstanz für die Kennzeichnungsschichten Glaspulver und/oder Emaillepulver mit zugesetzten hitzebeständigen Farbpigmenten verwendet wird und dass diese Grundsubstanz vor dem Auftragen durch Zugabe von Transferlack oder Drucköl in pastöse Form gebracht wird.

Es ist möglich, dass das Auftragen jeder Kennzeichnungsschicht statt in flüssiger Form oder pastöser Form auch in trockenem Zustand in Pulverform mittels eines Bronzierverfahrens erfolgen kann. Insbesondere ist in diesem Zusammenhang denkbar, dass als Grundsubstanz für die Kennzeichnungsschichten Glaspulver und/oder Emaillepulver mit zugesetzten hitzebeständigen Farbpigmenten verwendet wird.

Des Weiteren ist denkbar, dass das Auftragen der einzelnen Kennzeichnungsschichten mittels eines Spritzlackierverfahrens erfolgen kann. Auch ist denkbar, dass für das Auftragen der einzelnen Kennzeichnungsschichten ein Walzlackierverfahren herangezogen werden kann.

Besonders vorteilhaft ist es, wenn der auf der ersten Schicht, also der Trägerschicht aufgebaute Schichtenstapel bestehend aus den Kennzeichnungsschichten vor seiner Zerkleinerung getrocknet und/oder gehärtet und/oder getempert wird. Dabei können Trocknung und Härtung bevorzugt durch Wärme und/oder UV- Strahlung bewirkt werden. Dieser Schritt der Trocknung und/oder Härtung und/oder Temperung ist zweckmäßig, um vor dem nachfolgenden Zerkleinern des Schichtenstapels in die einzelnen Mikropartikel den einzelnen Schichten in sich und dem Schichtenstapel für diese Zerkleinerung günstige mechanische Eigenschaften zu verleihen. Insbesondere wird dadurch eine relativ hohe Sprödigkeit bei gleichzeitig guter Stabilität und festem Zusammenhalt der Schichten erreicht.

Das Zerkleinern des Schichtenstapels kann auf an sich bekannte Art und Weise, z. B. in geeigneten Mühlen, wie z. B. Kugelmühlen erfolgen. Diese Zerkleinerung erfolgt zweckmäßig nur soweit, dass innerhalb der überwiegenden Zahl der dabei entstehenden Mikropartikel jeweils noch die volle Kennzeichnungsschichtenfolge enthalten ist, um die Identifizierung mit den Mikropartikeln gekennzeichneten Stoffen oder Gegenständen zweifelsfrei zu ermöglichen. Nach dem Zerkleinerungsvorgang kann zusätzlich auch noch eine Sortierung der Mikropartikel erfolgen, wobei dann diejenigen Mikropartikel, die nicht mehr über die volle Kennzeichnungsschichtenfolge und/oder kein vollständiges Zeichen verfügen, aussortiert werden, um sie von der weiteren Verwendung für Kennzeichnungszwecke auszuschließen.

Vorteilhafterweise wird dabei die Größe der Mikropartikel in einem Bereich zwischen ca. 8 µm bis ca. 100 µm gewählt, da in diesem Bereich jedenfalls sichergestellt ist, dass wenigstens ein Zeichen auf der außen liegenden Seite der Trägerschicht erkennbar ist.

Des Weiteren betrifft die vorliegende Erfindung einen Mikropartikel, insbesondere einen Mikropartikel zur fälschungssicheren Kennzeichnung von Produkten. Dabei weist der Mikropartikel wenigstens eine erste Schicht und wenigstens eine zweite Schicht auf, wobei die erste Schicht eine außen liegende Seite des Mikropartikels bildet und wenigstens auf dieser außen liegenden Seite zumindest ein auf dieser Seite ein mittels eines Transferverfahrens vorangebrachtes Zeichen angeordnet ist. Durch die Voranbringung eines Zeichens mittels eines Transferverfahrens kann die außen liegende Seite der ersten Schicht des Mikropartikels einfach mit einem vorangebrachten Zeichen versehen werden. Die Voranbringung kann dabei zuverlässig und hochgenau erfolgen.

Des Weiteren kann vorgesehen sein, dass das zumindest eine Zeichen zumindest einen Teil eines Hologramms und/oder eines Aufdruckes ist, wobei vorzugsweise das Zeichen wenigstens einen Buchstaben, wenigstens einen Teil eines Bildzeichens und/oder wenigstens eines Wort-/Bildzeichens, insbesondere eines Logos und/oder Markenzeichens ist oder ein derartiges Zeichen umfasst.

Es ist weiter möglich, dass die zweite Schicht eine Farbschicht ist. Denkbar ist grundsätzlich, dass auch die erste Schicht eine Farbschicht ist. Dies gilt auch für alle weiteren Schichten. Alternativ kann auch vorgesehen sein, dass die erste Schicht eine Trägerschicht, wie beispielsweise eine Kunststoffschicht oder Kunststofffolie ist. Denkbar ist insbesondere, dass eine PET-Folie verwendet wird, die insbesondere hitze- bzw. wärmestabil ist und ihre Abmessungen nicht oder nur geringfügig ändert.

Darüber hinaus kann vorgesehen sein, dass wenigstens eine weitere Schicht, vorzugsweise mehrere weitere Schichten vorgesehen sind, die vorzugsweise auf der zweiten Schicht aufgetragen und/oder angeordnet sind, wobei vorzugsweise die weiteren Schichten Farbschichten sind, so dass vorzugsweise die zweite Schicht und die weiteren Schichten eine Anordnung von Schichten ergeben, die derart beschaffen ist, dass durch die Schichten ein Farbcode ausgebildet wird, wobei die Schichten vorzugsweise eine Schichtstärke im Bereich von ca. 0,5 µm bis ca. 50 µm vorzugsweise ca. 0,8 µm aufweisen.

Des Weiteren kann vorgesehen sein, dass der Mikropartikel wenigstens eine Fläche aufweist, die derart beschaffen ist, dass die übereinanderliegenden Schichten ersichtlich sind.

Außerdem ist möglich, dass das zumindest eine Zeichen zumindest ein Teil eines Hologramms und/oder eines Aufdruckes ist, wobei vorzugsweise das Zeichen wenigstens einen Buchstaben, wenigstens einen Teil eines Bildzeichens und/oder wenigstens eines Wort-/Bildzeichens, insbesondere eines Logos und/oder Markenzeichens ist oder ein derartiges Zeichen umfasst.

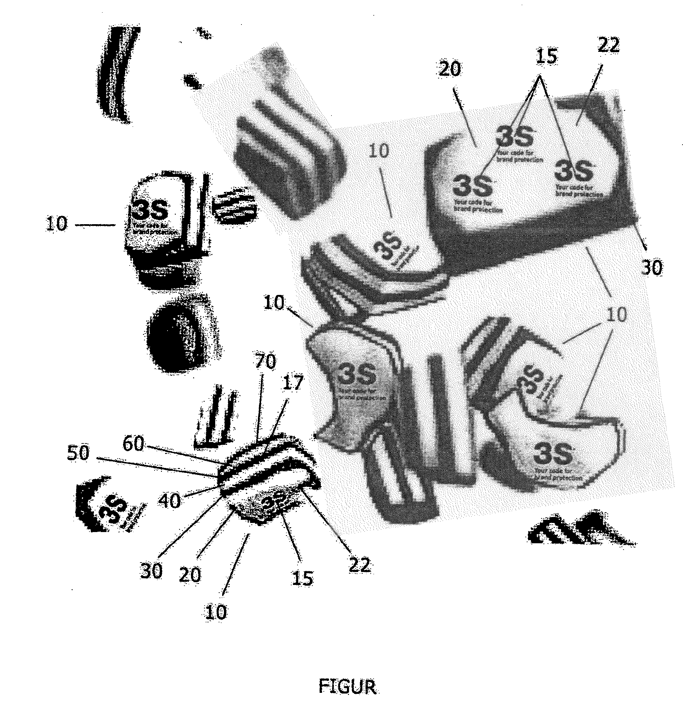

Die einzige Figur zeigt eine Vielzahl von Mikropartikeln gemäß der vorliegenden Erfindung.

Wie sich dies aus der Figur ergibt, sind die Mikropartikel 10 aufgrund des Zerkleinerungsvorgangs nicht identisch, sondern hinsichtlich ihrer Formgebung randomisiert, d.h. die Formgebung der Partikel ist zufällig und nicht vordefiniert.

Die Mikropartikel 10 dienen zur fälschungssicheren Kennzeichnung von Produkten und weisen dabei wenigstens eine erste Schicht 20 auf, auf der im Herstellungsverfahren die weiteren Schichten 30, 40, 50, 60, 70 aufgetragen werden. Die erste Schicht 20 ist somit eine Trägerschicht 20.

Die Schichten 30, 40, 50, 60, 70 sind dabei Farbschichten, die auf die Trägerschicht 20 aufgetragen werden.

Die erste Schicht 20 bzw. Trägerschicht 20 bildet eine außen liegende Seite 22 des Mikropartikels 10. Auf dieser außen liegenden Seite 22 ist dabei zumindest ein Zeichen 15, hier ein Logo 15 bzw. die Marke eines Unternehmens 15 angeordnet. Dieses Zeichen 15 ist dabei bereits im Vorfeld auf der Schicht 20 aufgebracht bzw. aufgetragen.

Die Aufbringung des Zeichens 15 erfolgt mittels eines Transferverfahrens.

Bei dem Transferverfahren kann es sich um ein Heißtransferverfahren, ein Sublimationsdruckverfahren oder um ein Nasstransferverfahren handeln.

Im Wesentlichen wird beim Verfahren zur Herstellung des Mikropartikels 10 zunächst die erste Schicht 20 bereitgestellt und sodann die zweite Schicht 30 auf der ersten Schicht 20 aufgetragen. Alternativ kann auch gleich auf der ersten Schicht 20 das wenigstens eine Zeichen 15 aufgetragen werden. Jedenfalls wird das Zeichen 15 auf der von der zweiten Schicht 30 abgewandten Seite der ersten Schicht 20 angebracht.

Gegebenenfalls können dann weitere Schichten aufgetragen werden und danach erfolgt die Zerkleinerung der Schichten zur Herstellung der Mikropartikel 10.

Insbesondere kann es sich bei der Schicht 20 um eine Trägerfolie, insbesondere um eine Polyesterfolie bzw. eine PET-Folie handeln. Die Zeichen 15 können dabei aufgedruckt oder in sonstiger Form auf der Trägerfolie 20 aufgebracht sein.

Grundsätzlich ist auch denkbar, dass die Zeichen 15 als Schrift im Nanobereich auf der Trägerschicht 20 aufgebracht sind. Denkbar ist beispielweise, dass die Schrifthöhe oder die Zeichenhöhe 1 nm oder mehr beträgt.

Es ferner denkbar, dass die Trägerfolie 20 auf der Seite 22 mehrere Zeichen 15 in Form von Hologrammen oder Aufdrucken aufweist.

Die Mikropartikel 10 sind dabei derart beschaffen, dass die Mikropartikel 10 mit jeder ihrer Abmessungen ca. 200-300 µm nicht überschreiten, vorzugsweise 50 µm, besonders bevorzugt 8 µm. Im in der Figur gezeigten Ausführungsbeispiel sind die Abmessungen der Mikropartikel 10 im Bereich zwischen ca. 8 µm bis ca. 100 µm gewählt, wobei jedoch diese Untergrenze und Obergrenze nicht unter- bzw. überschritten wird.

Die Schichten 30, 40, 50, 60, 70 sind Farbschichten, hier beispielsweise eine rote Farbschicht 30, eine weiße Farbschicht 40, eine blaue Farbschicht 50, eine weitere weiße Farbschicht 60 und eine schwarze Farbschicht 70.

Der Mikropartikel 10 weist ferner wenigstens eine Fläche 17 auf, die derart beschaffen ist, dass die übereinander liegenden Farbschichten 30, 40, 50, 60, 70 ersichtlich sind. Die Fläche 17 ist eine Seitenfläche 17, die durch den Zerkleinerungsprozess während der Herstellung des Mikropartikels 10 entsteht, also beispielsweise im Wesentlichen eine Schnittkante oder eine Bruchkante ist.

Die Anordnung dieser Farben bzw. Farbschichten 30, 40, 50, 60, 70 bildet einen Farbcode aus, der in Kombination mit dem Zeichen 15, hier beispielsweise dem Markenzeichen eines Unternehmens insgesamt einen fälschungssicheren Code ausbildet. Dieser Code kann einfach beispielsweise mittels eines Stabmikroskopes bzw. Auflichtmikroskopes überprüft werden.

Die Mikropartikel 10 können dabei in ein Etikett eingebracht oder auf einem Etikett aufgetragen werden, beispielsweise mittels eines Aufstriches wie beispielsweise eines Klarlackes oder dergleichen wie ein transparentes Harz oder ein transparenter Kleber.

Grundsätzlich ist auch denkbar, dass die Mikropartikel 10 in einem Aufstrich, wie beispielsweise einer Farbe oder einem Lack dispergiert werden und somit direkt auf dem zu kennzeichnenden Produkt aufgebracht werden können.

Zur Herstellung der Mikropartikel 10 wird derart vorgegangen, dass auf der als Trägerschicht fungierenden ersten Schicht 20 nacheinander die Schichten 30, 40, 50, 60, 70 aufgetragen werden, wobei vorzugsweise das Auftragen der Kennzeichnungsschichten 30, 40, 50, 60, 70 in flüssiger Form erfolgt und wobei nach dem Auftragen jeder Kennzeichnungsschicht 30, 40, 50, 60, 70 eine Trocknung und/oder Härtung erfolgt, bevor die nächste Kennzeichnungsschicht 30, 40, 50, 60, 70 aufgetragen wird. Dies wird solange fortgeführt bis ein Schichtenstapel mit der gewünschten Art und Folge von Kennzeichnungsschichten ausgebildet ist. Sodann wird der Schichtenstapel unter Erhaltung der vollen Kennzeichnungsschichtenfolge zu mehrschichtigen Mikropartikeln 10 zerkleinert.

Das Auftragen der einzelnen Kennzeichnungsschichten erfolgt dabei mittels eines Druckverfahrens, wobei vorzugsweise ein Hochdruckverfahren oder ein Tiefdruckverfahren oder ein Flachdruckverfahren oder ein Durchdruckverfahren bzw. Siebdruckverfahren verwendet werden kann.

Grundsätzlich ist auch denkbar, dass das Auftragen jeder Kennzeichnungsschicht 30, 40, 50, 60, 70 statt in flüssiger Form auch in pastöser Form erfolgen kann. Insbesondere ist in diesem Zusammenhang denkbar, dass das Auftragen jeder Kennzeichnungsschicht 30, 40, 50, 60, 70 in einem thixotropen Zustand erfolgen. Möglich ist insbesondere auch, dass als Grundsubstanz für die Kennzeichnungsschichten 30, 40, 50, 60, 70 Glaspulver und/oder Emaillepulver mit zugesetzten hitzebeständigen Farbpigmenten verwendet wird und dass diese Grundsubstanz vor dem Auftragen durch Zugabe von Transferlack oder Drucköl in pastöse Form gebracht wird.

Es ist möglich, dass das Auftragen jeder Kennzeichnungsschicht 30, 40, 50, 60, 70 statt in flüssiger Form oder pastöser Form auch in trockenem Zustand in Pulverform mittels eines Bronzierverfahrens erfolgen kann. Insbesondere ist in diesem Zusammenhang denkbar, dass als Grundsubstanz für die Kennzeichnungsschichten 30, 40, 50, 60, 70 Glaspulver und/oder Emaillepulver mit zugesetzten hitzebeständigen Farbpigmenten verwendet wird.

Des Weiteren ist denkbar, dass das Auftragen der einzelnen Kennzeichnungsschichten mittels eines Spritzlackierverfahrens erfolgen kann. Auch ist denkbar, dass für das Auftragen der einzelnen Kennzeichnungsschichten 30, 40, 50, 60, 70 ein Walzlackierverfahren herangezogen werden kann.

Besonders vorteilhaft ist es, wenn der auf der Trägerschicht 20 aufgebaute Schichtenstapel bestehend aus den Kennzeichnungsschichten 30, 40, 50, 60, 70 vor seiner Zerkleinerung getrocknet und/oder gehärtet und/oder getempert wird. Dabei können Trocknung und Härtung bevorzugt durch Wärme bewirkt werden. Dieser Schritt der Trocknung und/oder Härtung und/oder Temperung ist zweckmäßig, um vor dem nachfolgenden Zerkleinern des Schichtenstapels in die einzelnen Mikropartikel 10 den einzelnen Schichten in sich und dem Schichtenstapel für diese Zerkleinerung günstige mechanische Eigenschaften zu verleihen. Insbesondere wird dadurch eine relativ hohe Sprödigkeit bei gleichzeitig guter Stabilität und festem Zusammenhalt der Schichten 20, 30, 40, 50, 60, 70 erreicht.

Das Zerkleinern des Schichtenstapels kann auf an sich bekannte Art und Weise, z. B. in geeigneten Mühlen, wie z. B. Kugelmühlen erfolgen. Diese Zerkleinerung erfolgt zweckmäßig nur soweit, dass innerhalb der überwiegenden Zahl der dabei entstehenden Mikropartikel 10 jeweils noch die volle Kennzeichnungsschichtenfolge enthalten ist, um die Identifizierung mit den Mikropartikeln 10 gekennzeichneten Stoffen oder Gegenständen zweifelsfrei zu ermöglichen. Nach dem Zerkleinerungsvorgang kann zusätzlich auch noch eine Sortierung der Mikropartikel 10 erfolgen, wobei dann diejenigen Mikropartikel, die nicht mehr über die volle Kennzeichnungsschichtenfolge und/oder vollständiges ein Zeichen 15 verfügen, aussortiert werden, um sie von der weiteren Verwendung für Kennzeichnungszwecke auszuschließen.

Vorteilhafterweise wird dabei die Größe der Mikropartikel 10 in einem Bereich zwischen ca. 8 µm bis ca. 100 µm gewählt, da in diesem Bereich jedenfalls sichergestellt ist, dass wenigstens ein Zeichen 15 auf der außen liegenden Seite 22 der Trägerschicht 20 erkennbar ist.

## Patentansprüche

1. Verfahren zur Herstellung wenigstens eines Mikropartikels (10), insbesondere eines Mikropartikels (10) zur fälschungssicheren Kennzeichnung von Produkten, wobei das Verfahren wenigstens die folgenden Schritte aufweist:
- Es wird eine erste Schicht (20) bereitgestellt;
- es wird mittels eines Transferverfahrens wenigstens ein Zeichen (15) auf der ersten Schicht (20) angebracht; und
- die Schicht (20) mit dem Zeichen (15) wird zerkleinert.

2. Verfahren nach Anspruch 1, **dadurch gekennzeichnet, dass** weiter die folgenden Schritte vorgesehen sind:
- es wird wenigstens eine zweite Schicht (30) auf der Seite der ersten Schicht aufgetragen, auf der kein Zeichen (15) angebracht ist; und
- die Schichten werden gemeinsam zerkleinert.

3. Verfahren nach Anspruch 1 oder Anspruch 2, **dadurch gekennzeichnet, dass** das Transferverfahren ein Heißtransferverfahren ist.

4. Verfahren nach Anspruch 1 oder Anspruch 2, **dadurch gekennzeichnet, dass** das Transferverfahren ein Sublimationsdruckverfahren ist.

5. Verfahren nach Anspruch 1 oder Anspruch 2, **dadurch gekennzeichnet, dass** das Transferverfahren ein Nasstransfer ist.

6. Verfahren nach einem der vorhergehenden Ansprüche, **dadurch gekennzeichnet, dass** das zumindest eine Zeichen (15) zumindest ein Teil eines Hologramms und/oder eines Aufdruckes ist, wobei vorzugsweise das Zeichen (15) wenigstens einen Buchstaben, wenigstens ein Teil eines Bildzeichens und/oder wenigstens eines Wort-/Bildzeichens, insbesondere eines Logos und/oder Markenzeichens ist oder ein derartiges Zeichen umfasst.

7. Mikropartikel (10), insbesondere Mikropartikel (10) zur fälschungssicheren Kennzeichnung von Produkten, wobei der Mikropartikel (10) wenigstens eine erste Schicht (20) und wenigstens eine zweite Schicht (30) aufweist, wobei die erste Schicht (20) eine außen liegende Seite (22) des Mikropartikels (10) bildet und wenigstens auf dieser außen liegenden Seite (22) zumindest ein auf dieser Seite (22) ein mittels eines Transferverfahrens vorangebrachtes Zeichen (15) angeordnet ist.

8. Mikropartikel nach Anspruch 7, **dadurch gekennzeichnet, dass** das zumindest eine Zeichen (15) zumindest ein Teil eines Hologramms und/oder eines Aufdruckes ist, wobei vorzugsweise das Zeichen (15) wenigstens einen Buchstaben, wenigstens ein Teil eines Bildzeichens und/oder wenigstens eines Wort-/Bildzeichens, insbesondere eines Logos und/oder Markenzeichens ist oder ein derartiges Zeichen umfasst.

9. Mikropartikel (10) nach Anspruch 8, **dadurch gekennzeichnet, dass** die zweite Schicht (30) eine Farbschicht (30) ist.

10. Mikropartikel (10) nach einem der Ansprüche 7 bis 9, **dadurch gekennzeichnet, dass** wenigstens eine weitere Schicht (40), vorzugsweise mehrere weitere Schichten (40, 50, 60, 70) vorgesehen sind, vorzugsweise auf der zweiten Schicht (30) auftragen und/oder angeordnet sind, wobei vorzugsweise die weiteren Schichten (40, 50, 60, 70) Farbschichten sind, so dass vorzugsweise die zweite Schicht (30) und die weiteren Schichten (40, 50, 60, 70) eine Anordnung von Schichten ergeben, die derart beschaffen ist, dass durch die Schichten (30, 40, 50, 60, 70) ein Farbcode ausgebildet wird, wobei die Schichten (30, 40, 50, 60, 70) vorzugsweise jeweils eine Schichtstärke im Bereich zwischen ca.0,5 µm bis ca.50 µm, vorzugsweise ca.0,8 µm, aufweisen.

11. Mikropartikel (10) nach einem der vorhergehenden Ansprüche, **dadurch gekennzeichnet, dass** der Mikropartikel (10) wenigstens eine Fläche (17) aufweist, die derart beschaffen ist, dass die übereinander liegenden Schichten (20, 30) ersichtlich sind.

12. Mikropartikel (10) nach einem der vorhergehenden Ansprüche, **dadurch gekennzeichnet, dass** das zumindest eine Zeichen (15) zumindest ein Teil eines Hologramms und/oder eines Aufdruckes ist, wobei vorzugsweise das Zeichen (15) wenigstens einen Buchstaben, wenigstens ein Teil eines Bildzeichens und/oder wenigstens eines Wort-/Bildzeichens, insbesondere eines Logos und/oder Markenzeichens ist oder ein derartiges Zeichen umfasst.
